# EUROPEAN PATENT APPLICATION

(11) **EP 4 730 180 A1**
(43) Date of publication of application: **22.04.2026**
(21) Application number: 25201438.6
(22) Date of filing: 10.09.2025
(51) Int. Cl.: G06F 21/60, G06F 21/62, H04L 9/40, H04N 1/44

(54) **SYSTEM AND METHOD FOR PARTIALLY ENCRYPTING IMAGE FILES BASED ON AN IMAGE POLICY**

(30) Priority: 21.10.2024 US 202418921194
(71) Applicant: TOYOTA JIDOSHA KABUSHIKI KAISHA, Toyota-shi, Aichi-ken 471-8571 (JP)
(72) Inventor: ATTIA, Sedny, Samir, Joseph, TOYOTA-SHI, AICHI-KEN, 471-8571 (JP); CAMPEAU, Jean-François, TOYOTA-SHI, AICHI-KEN, 471-8571 (JP); SHIOTA, Kentaro, TOYOTA-SHI, AICHI-KEN, 471-8571 (JP); MAU II, Frederick, William, TOYOTA-SHI, AICHI-KEN, 471-8571 (JP)
(74) Representative: Cabinet Beau de Loménie

(57) **Abstract**

Systems and methods for partially encrypting image files based on an image policy related to a location where the image was captured are described. In one example, a system includes a processor and a memory that is in communication with the processor. The memory includes instructions that, when executed by the processor, cause the processor to evaluate an image based on an image policy related to a location where the image was captured to determine a sensitive portion of the image and encrypt the sensitive portion of the image such that the sensitive portion of the image is non-viewable.

## Description

### TECHNICAL FIELD

The subject matter described herein relates, in general, to systems and methods for partially encrypting image files based on an image policy.

### BACKGROUND

The background description provided is to present the context of the disclosure generally. Work of the inventor, to the extent it may be described in this background section, and aspects of the description that may not otherwise qualify as prior art at the time of filing, are neither expressly nor impliedly admitted as prior art against the present technology.

There are a number of different providers that make available images of public locations for public consumption. For example, Google Maps is a product offered by Alphabet, Inc. of Menlo Park, California, which enables users to view and navigate through 360-degree horizontal and 290-degree vertical panoramic street-level images of various locations. However, the public availability of these captured images raises privacy issues. For example, captured images may include identifying information, such as license plates, facial information, and/or other sensitive information.

To obviate these concerns, providers of these images generally obfuscate portions of the images that may contain sensitive and/or private information. For example, facial information and license plate information may be blurred to reduce privacy concerns. However, this obfuscation process permanently alters the image.

### SUMMARY

This section generally summarizes the disclosure and is not a comprehensive explanation of its full scope or all its features.

In one embodiment, a system includes a processor and a memory that is in communication with the processor. The memory includes instructions that, when executed by the processor, cause the processor to evaluate an image based on an image policy related to a location where the image was captured to determine a sensitive portion of the image and encrypt the sensitive portion of the image such that the sensitive portion of the image is non-viewable. The memory may further comprise instructions that, when executed by the processor, cause the processor to, in response to the image policy being updated to an updated image policy:
decrypt the image such that the sensitive portion of the image is viewable;
evaluate the image based on the updated image policy to determine an updated sensitive portion of the image; and
encrypt the updated sensitive portion of the image such that the updated sensitive portion of the image is non-viewable.
The memory may further comprise instructions that, when executed by the processor, cause the processor to determine that the updated image policy applies to the image based on the location where the image was captured.
The sensitive portion may include at least one of: a visible identifier, a human face, a vehicle, and a building.
The image policy may be at least one of a municipal requirement and a local custom.
A neural network may be utilized to determine the sensitive portion of the image.
The memory may further comprise instructions that, when executed by the processor, cause the processor to deploy the image to a cloud-based server after encrypting the sensitive portion of the image, wherein the image is publicly accessible via the cloud-based server.

In another embodiment, a method includes the steps of evaluating an image based on an image policy related to a location where the image was captured to determine a sensitive portion of the image and encrypting the sensitive portion of the image such that the sensitive portion of the image is non-viewable.
The method may comprise in response to the image policy being updated to an updated image policy:
decrypting the image such that the sensitive portion of the image is viewable;
evaluating the image based on the updated image policy to determine an updated sensitive portion of the image; and
encrypting the updated sensitive portion of the image such that the updated sensitive portion of the image is non-viewable.
The method may comprise determining that the updated image policy applies to the image based on the location where the image was captured.
The sensitive portion may include at least one of: a visible identifier, a human face, a vehicle, and a building.
The image policy may be at least one of a municipal requirement and a local custom.
A neural network may be utilized to determine the sensitive portion of the image.
The method may further comprise, after encrypting the sensitive portion of the image, deploying the image to a cloud-based server, wherein the image is publicly accessible via the cloud-based server.
In another embodiment, a computer program comprises instructions which, when the program is executed by a computer, cause the computer to carry out the method.

In yet another embodiment, a non-transitory computer-readable medium includes instructions that, when executed by a processor, cause the processor to evaluate an image based on an image policy related to a location where the image was captured to determine a sensitive portion of the image and encrypt the sensitive portion of the image such that the sensitive portion of the image is non-viewable.
The non-transitory computer-readable medium may further comprise instructions that, when executed by the processor, cause the processor to carry out the method.

Further areas of applicability and various methods of enhancing the disclosed technology will become apparent from the description provided. The description and specific examples in this summary are intended for illustration only and are not intended to limit the scope of the present disclosure.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates one example of a system for partially encrypting an image based on an image policy.
FIG. 2 illustrates a method for partially encrypting an image based on an image policy.
FIGS. 3A and 3B illustrate one example of an image before partial encryption and after partial encryption, respectively.
FIGS. 4A and 4B illustrate another example of an image before partial encryption and after partial encryption, respectively.
FIG. 5 illustrates a method for partially encrypting an image based on an updated image policy.

### DETAILED DESCRIPTION

Described herein are systems and methods for partially encrypting an image. In one example, a system receives an image along with location information indicating where the image was captured. Using the location information related to the image, the system can determine if an image policy should be utilized to evaluate the image for sensitive information. In some cases, the image policy may be a municipal regulation that dictates what information should be or should not be publicly available. For example, some municipal regulations require that identifying information captured in the image, such as facial information, license plates, or other identifying information, be obscured before being provided for public consumption. The system, utilizing a discrete algorithm(s) and/or neural network, evaluates the image to identify sensitive portions (i.e., regions of interest) of the image based on the image policy that relates to the location where the image was captured. Once identified, the image is partially encrypted, wherein sensitive portions of the image are encrypted, preventing them from being viewed without the appropriate key but allowing the rest of the image to be viewable.

As mentioned in the background section, traditional methodologies obscure sensitive portions of the image utilizing a number of different methodologies, such as pixel blurring. While effective at preventing the public from viewing the sensitive portions, this type of methodology permanently changes the image, preventing the sensitive portions from ever being viewable, even if the appropriate authorizations are given. For example, police or other authorized actors cannot, even with the appropriate authorization, view the sensitive portions because the image was permanently altered. In another example, if an image policy is updated to be less restrictive, because the image was permanently altered, the image cannot be updated to reflect the less restrictive image policy.

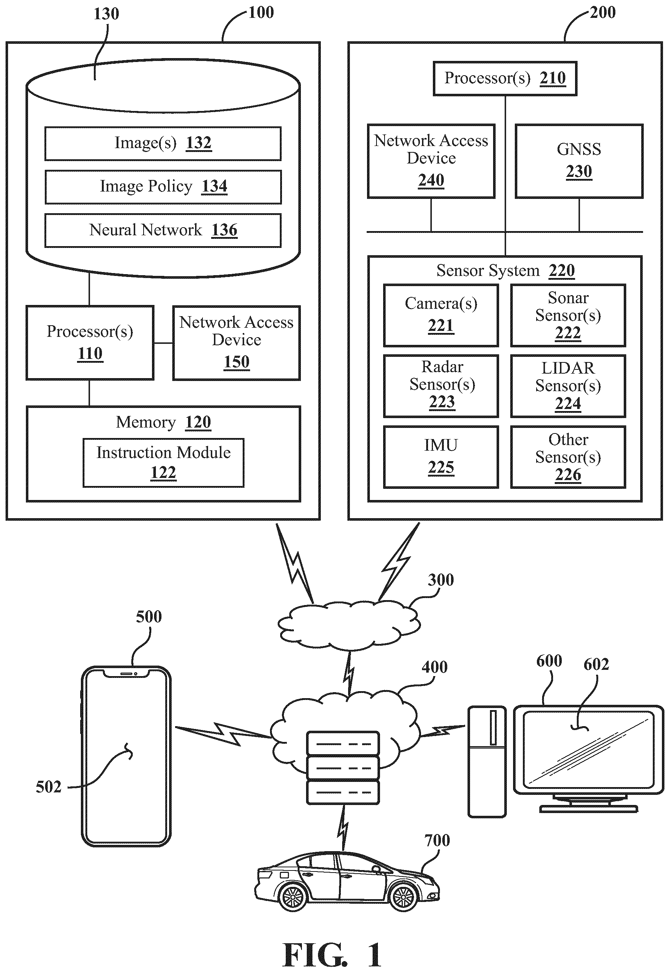

Referring to FIG. 1, illustrated is a system 100 for partially encrypting one or more image(s) 132. Before discussing the system 100 in detail, a brief description of one example of how the image(s) 132 are captured and provided to the system 100 will be provided. Moreover, FIG. 1 also illustrates an image-capturing device that is in the form of a vehicle 200. It should be understood that the image-capturing device that captures the image(s) 132 can take any one of a number of different forms. As such, in this example, the image-capturing device is in the form of a vehicle 200, but it should be understood that the image-capturing device can take other forms, such as a hand-held camera, a mobile device, such as a mobile phone that includes a camera sensor, a stationary camera that may be fixed to a structure, and the like.

The vehicle 200 may include one or more processor(s) 210, a sensor system 220, a global navigation satellite system (GNSS) 230, and/or a network access device 240. It will be understood that in various embodiments, it may not be necessary for the system 100 and/or the vehicle 200 to have all of the elements shown in FIG. 1. The system 100 and/or the vehicle 200 can have any combination of the various elements shown in FIG. 1. Further, the system 100 and/or the vehicle 200 can have additional elements to those shown in FIG. 1. In some arrangements, the system 100 and/or the vehicle 200 may be implemented without one or more of the elements shown in FIG. 1. While the various elements are shown as being located within the system 100 and/or the vehicle 200 in FIG. 1, it will be understood that one or more of these elements can be located external to the system 100 and/or the vehicle 200. Further, the elements shown may be physically separated by large distances and provided as remote services (e.g., cloud-computing services).

The vehicle 200 can be any form of transport. In one or more implementations, the vehicle 200 is an automobile. While arrangements will be described herein with respect to automobiles, it will be understood that embodiments are not limited to automobiles. The vehicle 200 has a sensor system 220 that may include one or more sensors. "Sensor" means any device, component, and/or system that can detect and/or sense something. The one or more sensors can be configured to detect and/or sense in real time. As used herein, the term "real-time" means a level of processing responsiveness that a user or system senses as sufficiently immediate for a particular process or determination to be made or that enables the processor to keep up with some external process. Here, in this example, the sensor system 220 includes camera(s) 221, sonar sensor(s) 222, radar sensor(s) 223, LIDAR sensor(s) 224, an inertial measurement unit 225, and/or other sensor(s) 226. In particular, the camera(s) 221 may be utilized to capture the image(s) 132 that will be provided to the system 100.

As mentioned before, the vehicle 200 may also include a GNSS 230 that may be able to receive information from a satellite constellation to provide positioning, navigation, and timing information to one or more processor(s) 210 of the vehicle 200. The GNSS 230 may be used to provide information regarding the location where the image(s) 132 were captured and/or the time in which they were captured.

Information from the sensor system 220 and/or other vehicle systems, such as the GNSS 230, may be processed by the processor(s) 210 of the vehicle 200 and provided to the system 100 using a network access device 240 that can package and transmit this information to the system 100 via a network 300. The network 300 may be a wireless network that allows for the transmission of information from the vehicle 200 to the system 100. The network access device 150 of the system 100 may then receive this information from the vehicle 200 and save this information as the image(s) 132. As such, in one example, the camera(s) 221 of the sensor system 220 of the vehicle 200 can capture the image(s) 132 and can transfer the image(s) 132 along with position and/or timing information from the GNSS 230 to the system 100.

Returning to the system 100, the system 100 includes one or more processor(s) 110. Accordingly, the processor(s) 110 may be a part of the system 100, or the system 100 may access the processor(s) 110 through a data bus or another communication path. In one or more embodiments, the processor(s) 110 is an application-specific integrated circuit that is configured to implement functions associated with an instruction module 122. In general, the processor(s) 110 is an electronic processor, such as a microprocessor, which is capable of performing various functions as described herein.

In one example, the system 100 includes a memory 120 that stores instruction module 122. The memory 120 may be a random-access memory (RAM), read-only memory (ROM), a hard disk drive, a flash memory, or other suitable memory for storing the instruction module 122. The instruction module 122 is, for example, computer-readable instructions that, when executed by the processor(s) 110 cause the processor(s) 110 to perform the various functions disclosed herein.

Furthermore, in one example, the system 100 includes a data store 130. The data store 130 is, in one embodiment, an electronic data structure such as a database that is stored in the memory 120 or another memory and that is configured with routines that can be executed by the processor(s) 110 for analyzing stored data, providing stored data, organizing stored data, and so on. Thus, in one embodiment, the data store 130 stores data used by the instruction module 122 in executing various functions. In this example, the data store 130 may include the image(s) 132, an image policy 134, and a neural network 136. It should be understood that this is just one example of what can be stored in the data store 130. Fewer, more, or different elements may be stored within the data store 130.

As explained previously, the image(s) 132 may be captured by an image-capturing device, such as the vehicle 200 and transmitted to the system 100 via the network 300. Generally, the image(s) 132 may be a digital image(s) composed of picture elements, also known as pixels, with finite, discrete quantities of numeric representation for its intensity or gray level that is an output from its two-dimensional functions fed as input by its spatial coordinates denoted with x, y on the x-axis and y-axis, respectively. The image(s) 132 may also have location information associated with it that indicates where a particular image was captured. For example, the image(s) 132 may include metadata that indicates the location where the image was captured. However, location information regarding where a particular image was captured may be stored separately from the image(s) 132.

The image policy 134 may indicate what information should be displayed when making the image(s) 132 available for public consumption, for example, by a cloud-based server 400, as will be explained in greater detail later. Moreover, for example, the image policy 134 may be based on one or more municipal requirements, directives, suggestions, and the like. Furthermore, the image policy 134 may also take into account societal norms, expectations, cultural requirements, local customs, and the like.

For example, some governments have laws related to privacy. In some cases, some laws require that sensitive information, such as identifying information, captured in the image(s) 132 be obfuscated or otherwise be made unavailable for public consumption. Sensitive information can include information such as visible identifiers (license plates, identifying tags, and/or signs), a human face, a vehicle, a building, and the like. As such, in these examples, the image policy 134 would have requirements that comply with these laws. In addition, the image policy 134 may also include requirements related to national security. In some cases, the image policy 134 may require certain buildings, landmarks, or other captured information to be obfuscated or otherwise be made unavailable for public consumption.

The image policy 134 can also relate to private party requests for privacy. In some cases, some corporate actors, as well as some governments, allow private individuals or businesses to request that certain information be obfuscated, such as a building, landmark, or other information. In yet another example, the image policy 134 can also be related to cultural norms or other societal expectations. In some cases, while no specific law exists, there may be cultural norms regarding privacy that may be incorporated within the image policy 134.

The neural network 136 may also be stored within the data store 130. In the example given in this description, the neural network 136 may be a trained machine learning-based network that can identify sensitive portions of the image(s) 132 using the image policy 134. Of course, other methodologies for identifying sensitive portions of the images can also be utilized, such as discrete algorithms.

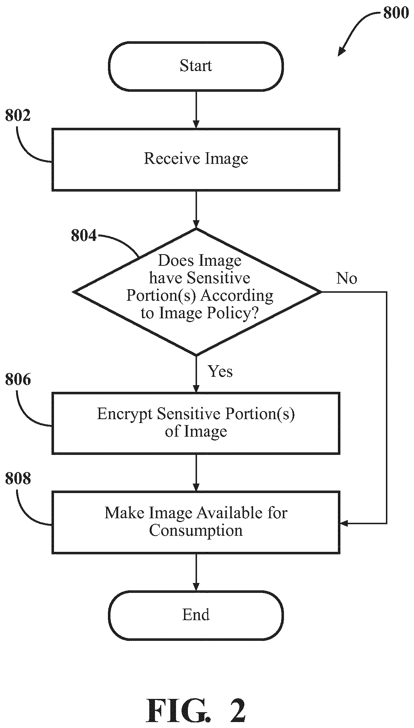

As mentioned before, the instruction module 122 contains instructions that cause the processor(s) 110 to perform any of the methodologies described herein. With reference to FIG. 2, illustrated is a method 800 for partially encrypting images, such as the image(s) 132 using the image policy 134. The method 800 will be described from the viewpoint of the system 100 in FIG. 1. However, it should be understood that this is just one example of implementing the method 800. While the method 800 is discussed in combination with the system 100, it should be appreciated that the method 800 is not limited to being implemented within the system 100, but is instead one example of a system that may implement the method 800. As such, the method 800 may be embodied within the instruction module 122 as processor-executable instructions that, when executed by the processor(s) 110, cause the processor(s) 110 to perform the method 800.

In step 802, the instruction module 122 contains instructions that, when executed by the processor(s) 110, causes the processor(s) 110 to receive the image(s) 132. As mentioned before, the image(s) 132 may be captured by an image-capturing device, such as the vehicle 200. Once captured, the image(s) 132 may be transmitted to the system 100 via the network 300 where they are stored within the data store 130. The image(s) 132 may come from a single source or multiple sources. In this example, since the image-capturing device is a vehicle 200, the image(s) 132 may be images taken while the vehicle 200 was traveling along one or more streets.

In step 804, the instruction module 122 contains instructions that, when executed by the processor(s) 110, cause the processor(s) 110 to evaluate the image(s) 132 to determine if they have sensitive portions according to the image policy 134, which was previously described. As mentioned before, the image(s) 132 may also have location data associated with it, and based on the location, a particular image policy, such as the image policy 134, may be utilized to evaluate the image(s) 132 for sensitive information. The location information related to the image(s) 132 may indicate the location where the image(s) 132 were captured. The location information can be utilized to determine which image policy 134 applies to the image(s) 132. For example, some governments have more restrictive image policies, while other governments have less restrictive image policies. Knowing the location where the particular image was taken can be utilized to determine which image policy 134 applies to the image(s) 132.

As explained before, the sensitive information can include identifying information, such as facial information, license plate information, identifying tags, and the like. Furthermore, the sensitive information can include other things related to privacy, national security, and the like. The processor(s) 110, when determining sensitive information, may utilize a discrete algorithm(s) that has been designed to identify sensitive information within the image(s) 132 and/or a trained neural network, such as the neural network 136, that has been trained to identify the sensitive information within the image(s) 132.

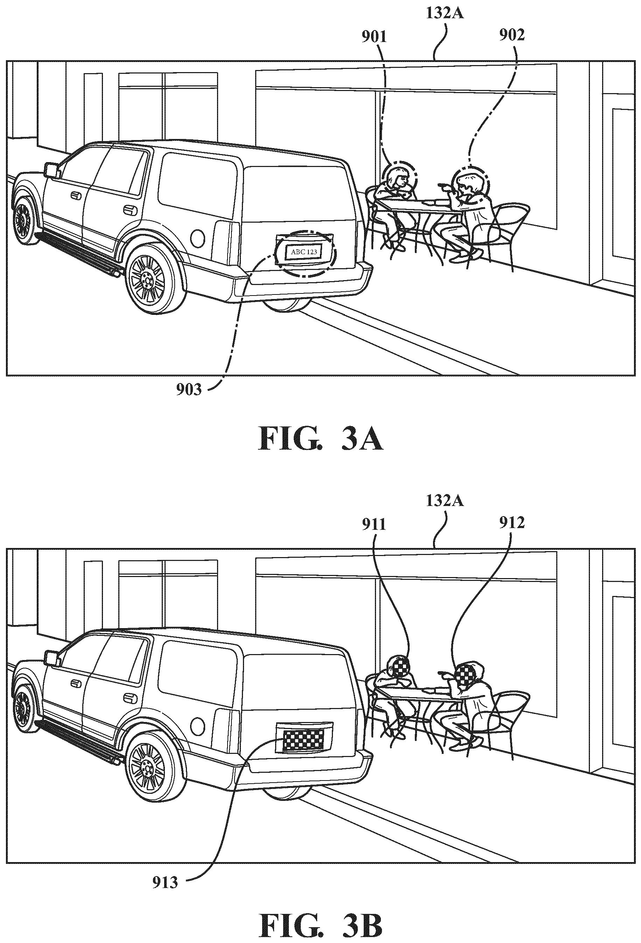

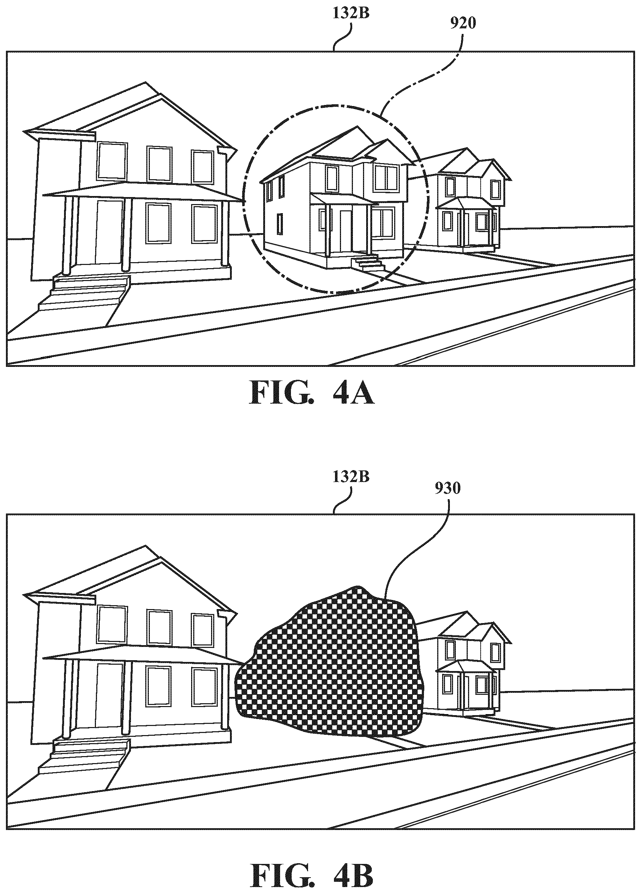

For example, referring to FIG. 3A illustrated is an image 132A. Within the image 132A are sensitive portions 901-903. Moreover, the sensitive portions 901 and 902 relate to facial information captured within the image 132A, while the sensitive portion 903 relates to license plate information that can be used to identify a vehicle. As mentioned before, the processor(s) 110 may utilize a discrete algorithm(s) and/or the neural network 136 to identify the sensitive portions 901-903. Another example is illustrated in FIG. 4A. Here, the sensitive portion 920 is a building that the image policy 134 dictates should be obfuscated. As mentioned before, in some cases, the image policy 134 may allow for private parties to request that their property, in this case, a house, be obscured from public viewing.

If the image(s) 132 are determined not to include any sensitive portions, the method 800 may proceed to step 802, wherein the image(s) 132 are made available for public consumption. As will be described in greater detail later, this may mean that the image(s) 132 may be deployed or otherwise provided to a cloud-based server 400, where they can be utilized by a number of different devices, such as the devices 500, 600, and 700 of FIG. 1, which will be described later in this description. In some cases, the image(s) 132 may undergo additional processing before being accessible via the cloud-based server 400. For example, the image(s) 132 may be stitched together with each other or other images to allow for an immersive viewing experience of a particular location.

However, if the image(s) 132 are determined to have sensitive portions, the method 800 proceeds to step 806, wherein the instruction module 122 contains instructions that, when executed by the processor(s) 110, cause the processor(s) 110 to partially encrypt the image(s) 132, such that the sensitive portions of the image(s) 132 are not viewable without the appropriate key. Any number of different encryption algorithms can be utilized to partially encrypt the image(s) 132, such that the sensitive portions of the images are not viewable without the appropriate decryption key. Examples of these encryption algorithms can include Advanced Encryption Standard (AES), Chaos-Based Encryption, Sine Map and Lorenz System, One-Dimensional eλ-cos-cot Map, SCAN Mapping, and the like.

Examples of partially encrypted images are shown in FIGS. 3B and 4B. Moreover, the sensitive portions 901-903 of FIG. 3A are now shown as encrypted visualizations 911-913. As such, the facial information and license plate information are not viewable in the image 132A after partial encryption. Similarly, the sensitive portion 920 of FIG. 3B is shown as an encrypted visualization 930. Like before, the building is not viewable in the image 132B after partial encryption.

Once the image(s) 132 have undergone partial encryption, the method 800 proceeds to step 808, which makes the images available for public consumption. As mentioned earlier, this may be achieved by providing the image(s) 132 or otherwise making them accessible to a cloud-based server 400, which can then provide access to the image(s) 132 to a number of different devices, such as the devices 500, 600, and 700. For example, the device 500 is a mobile device that includes a display area 502 that can display the partially encrypted image(s) 132. The device 600 is a desktop computer that includes a display 602 that can display the partially encrypted image(s) 132. The device 700 may be a computer installed within a vehicle that allows occupants of the vehicle to view the image(s) 132. Of course, it should be understood that the devices 500, 600, and 700 are just examples and are not a full listing of devices that may be able to access the image(s) 132 once they have undergone partial encryption.

In some cases, before making the image(s) 132 available for public consumption, the image(s) 132 may undergo preprocessing. For example, if the image(s) 132 are to be used in a street view application wherein users can virtually explore streets, landmarks, and the like, the image(s) 132 may be stitched together or otherwise assembled so that they can be used in the street view application. Other preprocessing steps may also occur, such as adjusting lighting, tone, etc., of the image(s) 132.

Partially encrypting the image(s) 132 that have sensitive portions can be particularly useful as they enhance computational and storage efficiency. In addition, partially encrypting the image(s) 132 preserves the original data within the image(s) 132, allowing it to be accessed later with the appropriate decryption key. As such, this allows parties with the appropriate authority, such as the police or some other authorized actor, to have visual access to the sensitive portions of the image(s) 132. Further still, in some cases, the image policy 134 may change. In cases where the image policy 134 becomes less restrictive, wherein sensitive portions may be no longer sensitive, the image(s) 132 can be decrypted and reevaluated according to an updated image policy.

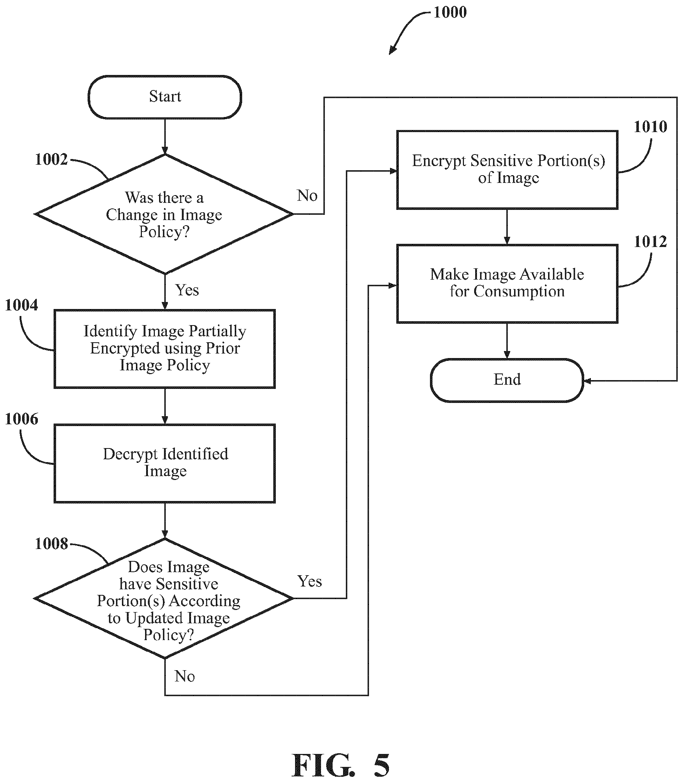

Referring to FIG. 5, a method 1000 illustrating how the image(s) 132 can be reevaluated when there is a change in image policy is shown. Like the method 800, the method 1000 will be described from the viewpoint of the system 100 of FIG. 1. However, it should be understood that this is just one example of implementing the method 1000. While the method 1000 is discussed in combination with system 100, it should be appreciated that the method 1000 is not limited to being implemented within the system 100, but is instead one example of a system that may implement the method 1000. As such, the method 1000 may be invited within the instruction module 122 as processor-executable instructions that, when executed by the processor(s) 110, cause the processor(s) 110 to perform the method 1000.

In step 1002, the instruction module 122 contains instructions that, when executed by the processor(s) 110, causes the processor(s) 110 to determine if the image policy 134 has been changed or otherwise updated. This may be achieved by reviewing the file history of the image policy 134 to determine if it has been modified. If there is no change in the image policy 134, the method 1000 ends. Otherwise, the method 1000 proceeds to step 1004.

In step 1004, the instruction module 122 contains instructions that, when executed by the processor(s) 110, causes the processor(s) 110 to identify the image(s) 132 that have been partially encrypted utilizing a prior image policy. In some cases, this may simply be all the image(s) 132 or may be a subset of the image(s) 132 that relate to the updated image policy.

In step 1006, the instruction module 122 contains instructions that, when executed by the processor(s) 110, causes the processor(s) 110 to decrypt the image(s) 132 that were identified in step 1004. The image(s) 132 can be decrypted utilizing the appropriate decryption key. The purpose for decrypting the image(s) 132 is so that they can be completely reevaluated utilizing the updated image policy 134.

In step 1008, the instruction module 122 contains instructions that, when executed by the processor(s) 110, causes the processor(s) 110 to evaluate the images to determine if they have updated sensitive portions according to the updated image policy. If the image(s) 132 do not have any sensitive portions according to the updated image policy 134, the method 1000 proceeds to step 1012, wherein the images are made available for consumption, for example, made available to the cloud-based server 400.

Otherwise, the method 1000 proceeds to step 1010, wherein sensitive portions of the image(s) 132 are encrypted. As explained previously, any number of different encryption algorithms can be utilized to partially encrypt the image(s) 132. Once the image(s) 132, which contain sensitive portions are partially encrypted, the image(s) 132 are made available for public consumption, as shown in step 1012.

As such, the systems and methods described herein can determine sensitive portions within images captured by image-capturing devices utilizing an image policy, such as vehicles, partially encrypt the images such that the sensitive portions are not viewable without the appropriate decryption key, and then provide them for public consumption. By so doing, this allows the original image to be accessible to parties with the appropriate authority. In addition, if there is a change in image policy, the images can be reevaluated and partially encrypted, if necessary, to comply with the newly updated image policy.

Detailed embodiments are disclosed herein. However, it is to be understood that the disclosed embodiments are intended only as examples. Therefore, specific structural and functional details disclosed herein are not to be interpreted as limiting but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-5, but the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any processing system or another apparatus adapted for carrying out the methods described herein is suited. A typical combination of hardware and software can be a processing system with computer-usable program code that, when being loaded and executed, controls the processing system such that it carries out the methods described herein. The systems, components, and/or processes also can be embedded in a computer-readable storage, such as a computer program product or other data programs storage device, readable by a machine, tangibly embodying a program of instructions executable by the machine to perform methods and processes described herein. These elements also can be embedded in an application product that comprises all the features enabling the implementation of the methods described herein and which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the preceding. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the preceding. In the context of this document, a computer-readable storage medium may be any tangible medium that can contain or store a program for use by or in connection with an instruction execution system, apparatus, or device.

Generally, module as used herein includes routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the preceding. Computer program code for carrying out operations for aspects of the present arrangements may be written in any combination of one or more programming languages, including an object-oriented programming language such as Java^{™}, Smalltalk, C++, or the like, and conventional procedural programming languages, such as the "C" programming language or similar programming languages. The program code may execute entirely on the user's computer, partly on the user's computer, as a stand-alone software package, and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

Aspects herein can be embodied in other forms without departing from the spirit or essential attributes thereof. Accordingly, reference should be made to the following claims rather than to the preceding specification, as indicating the scope hereof.

## Claims

1. A method comprising:
evaluating an image based on an image policy related to a location where the image was captured to determine a sensitive portion of the image; and
encrypting the sensitive portion of the image such that the sensitive portion of the image is non-viewable.

2. The method of claim 1, further comprising, in response to the image policy being updated to an updated image policy:
decrypting the image such that the sensitive portion of the image is viewable;
evaluating the image based on the updated image policy to determine an updated sensitive portion of the image; and
encrypting the updated sensitive portion of the image such that the updated sensitive portion of the image is non-viewable.

3. The method of claim 1 or 2, further comprising determining that the updated image policy applies to the image based on the location where the image was captured.

4. The method of any of claims 1 to 3, wherein the sensitive portion includes at least one of:
a visible identifier, a human face, a vehicle, and a building.

5. The method of any of claims 1 to 4, wherein the image policy is at least one of a municipal requirement and a local custom.

6. The method of any of claims 1 to 5, wherein a neural network is utilized to determine the sensitive portion of the image.

7. The method of any of claims 1 to 6, further comprising, after encrypting the sensitive portion of the image, deploying the image to a cloud-based server, wherein the image is publicly accessible via the cloud-based server.

8. A non-transitory computer-readable medium having instructions that, when executed by a processor, cause the processor to carry out the steps of the method of any of claims 1 to 7.

9. A computer program comprising instructions which, when the program is executed by a computer, cause the computer to carry out the method of any of claims 1 to 7.

10. A system (100) comprising:
a processor (110); and
a memory (120) in communication with the processor (110), the memory having instructions that, when executed by the processor (110), cause the processor (110) to carry out the method of any of claims 1 to 7.
